Europäisches Patentamt

**European Patent Office**

**Office européen des brevets**

(19)

(11) Veröffentlichungsnummer: **0 160 953**
**A2**

(12) **EUROPÄISCHE PATENTANMELDUNG**

(21) Anmeldenummer: **85105461.9**

(22) Anmeldetag: **04.05.85**

(51) Int. Cl.⁴: **A 01 F 29/00**

(30) Priorität: **10.05.84 DE 3417314**

(43) Veröffentlichungstag der Anmeldung:
**13.11.85 Patentblatt 85/46**

(84) Benannte Vertragsstaaten:
**AT BE CH DE FR GB IT LI LU NL SE**

(71) Anmelder: **Maschinenfabrik Kemper GmbH**
**Am Breul**
**D-4424 Stadtlohn(DE)**

(72) Erfinder: **Bertling, Alfred, Dipl.-Ing.**
**Kalter Weg 80**
**D-4424 Stadtlohn(DE)**

(74) Vertreter: **Busse & Busse Patentanwälte**
**Postfach 1226 Grosshandelsring 6**
**D-4500 Osnabrück(DE)**

(54) **Häcksler.**

(57) Es handelt sich um einen Häcksler, insbesondere zum Ernten von Silomais, mit einem in einem zylindrischen, eine Rückhaltewand bildenden Gehäuse (1) umlaufenden, mit Wurfschaufeln (2) versehenen Messerrad (3) oder einer Messertrommel und mit einer – gegebenenfalls wahlweise zuschaltbaren – Einrichtung zur Körnerzerkleinerung. Um bei einem solchen Häcksler ohne erhöhten Leistungsbedarf einen wesentlich erhöhten Zerkleinerungsgrad der im Silomais enthaltenen Körner zu erreichen und so deren Nährwert für die Viehfütterung voll nutzbar zu machen, ist vorgesehen, daß die Zerkleinerungseinrichtung von zumindest einer bereichsweise vorgesehenen Umfangserweiterung (9) des zylindrischen Gehäuses (1) gebildet ist, in der der aus dem Umfangsbereich des als Werkzeug vorgesehenen Messerrades (3) bzw. der Messertrommel etwa tangential abgeschleuderte Gutstrom (10) eine seinen etwa radialen Wiedereintritt in den Umfangsbereich des Werkzeugs bewirkende Umlenkung erfährt.

*Fig.1*

*Fig.2*

EP 0 160 953 A2

VB/St

## Häcksler

Die Erfindung betrifft einen Häcksler, insbesondere zum Ernten von Silomais, mit einer im Oberbegriff des Patentanspruchs 1 angegebenen Ausbildung.

Bei einem bekannten Häcksler dieser Art (DE-PS 27 33 314) ist als Zerkleinerungseinrichtung eine gewölbte, in einen Ausschnitt des zylindrischen Gehäuses einpaßbare Platte vorgesehen, die auf ihrer einen Seiten eine glatte, die zylindrische Gehäusewand fortsetzende Oberfläche aufweist und die auf ihrer anderen Seite mit Gegenwerkzeugen, wie Schlagleisten bzw. -stiften, versehen ist. In derjenigen Einbaustellung, in der die Platte mit ihrer mit den Gegenwerkzeugen versehenen Fläche im Innern des zylindrischen Gehäuses zugekehrt ist, wirken die Gegenwerkzeuge mit den Wurfschaufeln des Messerrades bzw. der Messertrommel im Sinne einer Zerkleinerung der Maiskörner zusammen.

Wie Versuche ergeben haben, ist die mit diesem bekannten Häcksler erreichbare Körnerzerkleinerung nicht zufriedenstellend. Derartige Reibplatten oder Reibböden schlagen nur einen kleinen Anteil der Maiskörner an, was für die Viehfütterung nicht ausreichend ist. Die ganzen oder nur angeschlagenen Maiskörner durchwandern nämlich den Verdauungstrakt der Tiere ohne Abbau bzw. Zersetzung, so daß ihre Nährwirkung nicht ausgenutzt wird. Überdies haben Häcksler mit derartigen Reibplatten bzw. -böden einen erhöhten Leistungsbedarf.

Die Erfindung hat sich die Aufgabe gestellt, einen Häcksler zu schaffen, mit dem ohne erhöhten Leistungsbedarf ein sehr hoher Zerkleinerungsgrad der im Silomais enthaltenen Körner erreicht wird, um so deren Nährwert für die Viehfütterung voll nutzbar zu machen.

Es wurde gefunden, daß sich dies mit einer Ausgestaltung des Häckslers in der im Kennzeichen des Patentanspruchs 1 angegebenen Weise erreichen läßt. Beim erfindungsgemäßen Häcksler erhalten die im Strom des Häckselguts befindlichen Maiskörner beim Wiedereintritt in den Umfangsbereich der Wurfschaufeln offensichtlich eine derart schlagartige Beanspruchung, daß sie überwiegend in mehrere kleine Teile zerspringen und so mit dem gewünschten hohen Zerkleinerungsgrad im Silogut enthalten sind. Weitere Merkmale und Einzelheiten der Erfindung sind in den Ansprüchen 2 bis 4 angegeben. Mit der Maßnahme nach Anspruch 4 läßt sich die Erfindung nicht nur bei neuen Geräten verwirklichen, sondern durch entsprechende Umrüstung auch bei bereits vorhandenen Häckslern ohne Zerkleinerungseinrichtung; auch läßt sich der erfindungsgemäße Häcksler wahlweise mit und ohne Zerkleinerungseinrichtung betreiben.

Der Gegenstand der Erfindung wird nachstehend anhand von in der Zeichnung dargestellten Ausführungsbeispielen näher beschrieben; in der Zeichnung zeigen:

Fig. 1    einen Vertikalschnitt durch einen Scheibenrad-Häcksler,

Fig. 2    einen Querschnitt nach Linie II-II in Fig. 1,

Fig. 3    eine Schema-Darstellung zu Fig. 1,

Fig. 4    eine Stirnansicht des unteren Teils des Gehäuses des Häckslers nach Fig. 1,

Fig. 5    eine Ansicht wie Fig. 4 mit zylindrischem Mantelteil des Häcksler-Gehäuses,

Fig. 6    eine Stirnansicht, teilweise geschnitten, des
          unteren Bereichs eines erfindungsgemäßen Häckslers
          in einer gegenüber Fig. 1 leicht abgewandelten Ausführung und

Fig. 7    eine Darstellung wie Fig. 6 mit einer weiteren
          Ausführungsform eines erfindungsgemäßen Häckslers.


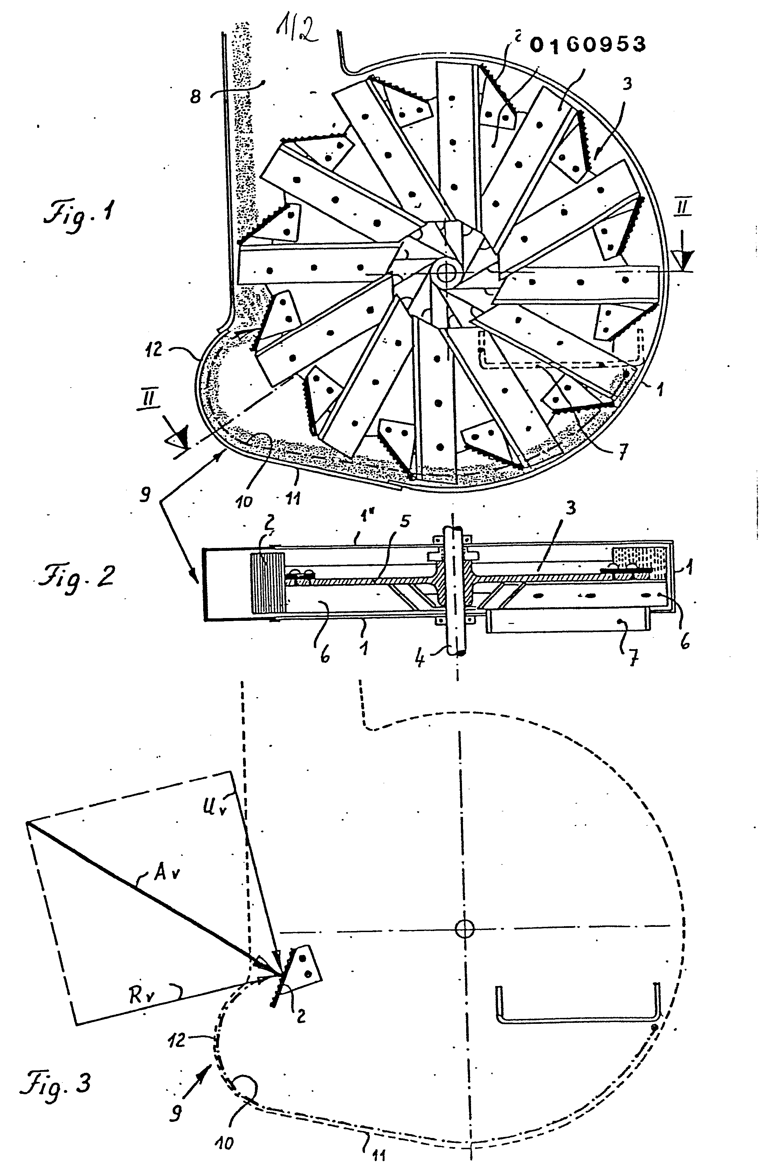

Bei dem in der Zeichnung zur Veranschaulichung von Ausführungsbeispielen der Erfindung dargestellten Häcksler handelt es
sich um einen Scheibenrad-Häcksler, d.h. einen Häcksler, bei
dem als Werkzeug ein in einem flachzylindrischen Gehäuse
(vgl. Fig. 2) umlaufendes, mit Wurfschaufeln versehenes Messerrad vorgesehen ist. Es versteht sich aber ohne weiteres,
daß statt eines solchen Scheibenradhäckslers auch ein Trommelhäcksler vorgesehen sein könnte, bei dem als Werkzeug eine
Messertrommel in einem entsprechenden langzylindrischen
Gehäuse umläuft.


Wie zunächst aus Fig. 1 bis 3 ersichtlich, ist in einem
zylindrischen Gehäuse 1 ein mit Wurfschaufeln 2 versehenes
Messerrad 3 drehbar gelagert. Das Messerrad 3 besteht beispielsweise aus einer auf einer Antriebswelle 4 festgesetzten
Scheibe 5, deren eine Fläche mit einer Mehrzahl schräg
angestellter Messer 6 besetzt ist. Im dargestellten Ausführungsbeispiel stehen die Messer 6 über den Umfang der
sie tragenden Scheibe 5 über und sind die Wurfschaufeln 2
am Umfang der Scheibe 5 jeweils zwischen zwei Messern angeordnet. Das so oder ähnlich ausgebildete Werkzeug 2,3,5,6
wird von der Antriebswelle 4 für einen Umlauf im Uhrzeigersinn angetrieben.


Das zylindrische Gehäuse 1, das in axialer Richtung durch
eine vordere Stirnfläche 1' und eine hintere Stirnfläche 1"
geschlossen ist, bildet dabei eine Rückhaltewand für das
dem Werkzeug zugeführte Häckselgut. Die Zufuhr des Häckselguts erfolgt durch eine an der vorderen Stirnfläche 1' des
Gehäuses 1 ausgebildete axiale Zuführöffnung 7, deren Innenkanten zweckmäßig als mit dem die Öffnung passierenden Messern 6 zusammenwirkende Gegenschneiden ausgebildet sind. Die Zuführöffnung 7 kann - gesehen in axialer Richtung und bezogen auf den Drehsinn des Werkzeugs - im I. Quadranten (etwa zwischen 2-Uhr- und 3-Uhr-Position) oder, wie im Ausführungsbeispiel dargestellt, im II.Quadranten (etwa in 4-Uhr-Position) angeordnet sein; auch eine Anordnung im Übergangsbereich zwischen I. und II. Quadranten (also etwa in 3-Uhr-Position) ist möglich. Das durch die Zuführöffnung in den Wirkungsbereich des Messerrades gelangende Gut wird beim Vorbeistreichen der Messer 6 am Innenrand der Zuführöffnung geschnitten bzw. gehäckselt und bildet dann normalerweise im II. oder III. Quadranten einen sich im Umfangsbereich des Messerrades 3 bewegenden und von der Innenwand des zylindrischen Gehäuses 1 zurückgehaltenen und umgelenkten Gutstrom aus, der im IV. Quadranten durch einen dort vorgesehenen Auswurfstutzen 8 tangential nach außen und oben ausgeworfen bzw. ausgeblasen wird. Bei einem üblichen Scheibenradhäcksler mit einem Werkzeug-Durchmesser von 650 mm und einer Drehzahl von 1400 U/min ergibt sich dabei eine Umfangsgeschwindigkeit. von etwa 170 km/h.

Erfindungsgemäß ist nun bei einem solchen Häcksler eine bereichsweise ausgebildete Umfangserweiterung 9 des zylindrischen Gehäuses 1. vorgesehen, und zwar vorzugsweise und entsprechend dem dargestellten Ausführungsbeispiel im III. Quadranten. Diese Umfangserweiterung 9 ist so ausgebildet, daß der Strom des gehäckselten Guts, wie er in Fig. 1 insgesamt schattiert und außerdem durch die strichpunktierte Linie 10 kenntlich gemacht ist, aus dem Umfangsbereich des als Werkzeug vorgesehenen Messerrades 3 etwa tangential nach außen abgeführt und dann über eine entsprechend ausgebildete Krümmung so weit wieder nach innen umgelenkt wird, daß er in etwa radialer Richtung wieder in den Umfangsbereich des Werkzeugs eintritt, von dem er dann wieder mitgenommen und durch den Auswurfstutzen 8 im IV. Quadranten in üblicher Weise ausgetragen wird. Wie insbesondere aus Fig. 3 ersichtlich, ergibt sich beim Wiedereintritt des Gutstroms in den Umfangsbereich des Werkzeugs an den Wurfschaufeln 2 eine sich aus
der Radialgeschwindigkeit $R_v$ und der Umfangsgeschwindigkeit $U_v$
resultierende Aufprallgeschwindigkeit $A_v$, die zu einer
weitgehenden Zertrümmerung bzw. Zerkleinerung der im Gutstrom befindlichen Maiskörner führt. Dabei spielt die
Neigung und Ausbildung der Wurfschaufeln 2 nach bisheriger
Erkenntnis keine besondere Rolle, wenngleich sich durch die
Formgebung der Umfangserweiterung 9 in Verbindung mit der
Neigung und Gestaltung der Wurfschaufeln 2 gewisse Verschiebungen innerhalb des erreichbaren hohen Zerkleinerungsgrades der Körner feststellen lassen, ohne daß jedoch insoweit
bisher innerhalb dieses verhältnismäßig kleinen Toleranzfeldes ein definitives Maximum erkennbar wäre. In jedem Fall
wird durch die erfindungsgemäße Ausgestaltung ein sehr hoher
Zertrümmerungs- bzw. Zerkleinerungsgrad der Körner erreicht,
und innerhalb der Umfangserweiterung 9 ergibt sich kein
Gutstromwirbel und somit auch keine Gutanhäufung.

Bei dem Ausführungsbeispiel nach Fig. 1 bis 3 hat die Umfangserweiterung 9 einen bereits von Anfang an leicht nach oben
und außen ansteigenden Bereich 11, der weich bzw. allmählich
in den die Umlenkung und Rückführung des Gutstroms bewirkenden Krümmungsbereich 12 übergeht. Bei dieser Ausbildung wird
die Geschwindigkeit des Gutstroms nur relativ wenig verringert, d.h. die Komponente $R_v$ der Radialgeschwindigkeit
ist verhältnismäßig hoch. Bei der Ausführung nach Fig. 6
ist demgegenüber ein einer horizontalen Tangente entsprechender
Verlauf des ersten Bereichs 11' der Umfangserweiterung 9
vorgesehen, an den sich dann der die Umlenkung und den radialen
Wiedereintritt des Gutstroms bewirkende Krümmungsbereich 12'
von etwa 180° anschließt. Der Gutstrom erfährt bei dieser
Ausbildung eine stärkere Verringerung seiner Geschwindigkeit,
d.h. die Komponente $R_v$ der Radialgeschwindigkeit beim Wiedereintritt in den Umfangsbereich des Werkzeugs ist geringer.
In Verbindung mit einer in diesem Fall angenommenen anderweitigen Neigung und Gestaltung der Wurfschaufeln 2' ergibt sich aber auch in diesem Fall eine relativ große, aus den Komponenten $R_v$ und $U_v$ resultierende Aufprallgeschwindigkeit $A_v$. Der Wert $A_v$ ist stets größer als $U_v$.

Die Fig. 7 zeigt eine modifizierte Ausführungsform mit zwei unmittelbar hintereinander angeordneten Umfangserweiterungen 9' und 9". Wie ersichtlich, wird der Gutstrom 10 zunächst in die erste Umfangserweiterung 9' tangential ausgetragen und in dieser zum radialen Wiedereintritt in den Umfangsbereich des hier entsprechend Fig. 1 bis 3 ausgebildeten Messerrades 3 umgelenkt. Unmittelbar nach dem Aufprall des Gutstroms auf einer der Wurfschaufeln 2 wird der Gutstrom 10 tangential in die zweite Umfangserweiterung 9" geschleudert und dort erneut zum radialen Wiedereintritt in den Umfangsbereich des Werkzeugs umgelenkt, durch das er nach dem zweiten Aufprall nach oben durch den Austragstutzen 8 (entsprechend Fig. 1 bis 3) ausgeworfen bzw. ausgeblasen wird. Mit dieser Ausführung nach Fig. 7 läßt sich vor allem dann der angestrebte hohe Zerkleinerungsgrad der im Häckselgut enthaltenen Körner erreichen, wenn die Körner vom übrigen Häckselgut stark umhüllt und noch nicht hinreichend vereinzelt sind. Die Doppel-Ausführung 9', 9" der Umfangserweiterung bewirkt, daß eine vorhandene Körnerumhüllung bzw. -abpufferung beim ersten Wiedereintritt in den Umfangsbereich des Werkzeugs aufgelöst bzw. zerschlagen wird, so daß die danach vereinzelten Körner beim zweiten Wiedereintritt in den Umfangsbereich des Werkzeugs von diesem nunmehr voll erfaßt und in dem gewünschten Maße zertrümmert bzw. zerkleinert werden.

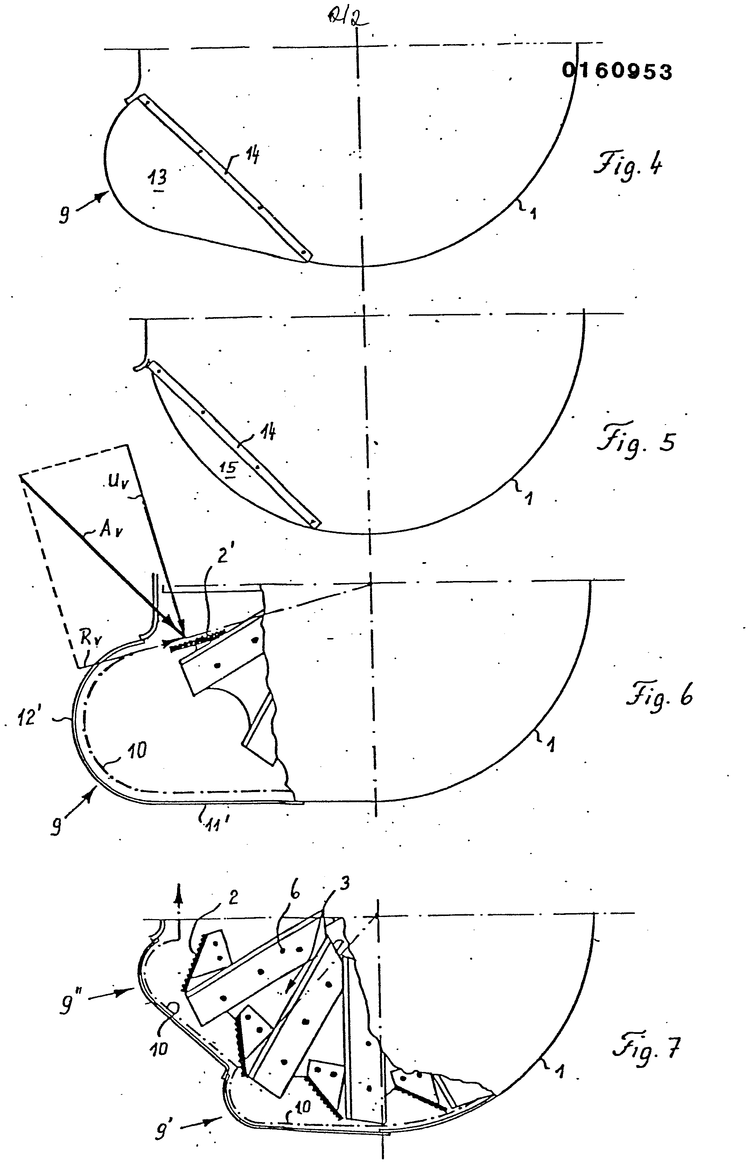

Die von der Umfangserweiterung 9 oder den Umfangserweiterungen 9', 9" gebildete Zerkleinerungseinrichtung ist in zweckmäßiger Weise als ein gesondertes Gehäuseteil 13 ausgeführt, das entlang einer z.B. als Sehne am zylindrischen Gehäuse 1,1',1" vorgesehen Verbindungsebene 14 anbringbar ist, wie dies in Fig. 4 für die Ausführung nach Fig. 1 bis 3 veranschaulicht ist. Auf diese Weise ist es möglich, Häcksler auch noch nachträglich mit der Zerkleinerungseinrichtung zu versehen. Zur Umrüstung bedarf es lediglich der Abtrennung eines Gehäuseteils entlang der Verbindungsebene 14 und des Ansetzens des die Zerkleinerungseinrichtung 9 bildenden Gehäuseteils 13 mittels geeigneter Verbindungsglieder.

Auch ist es durch die Ausbildung der Zerkleinerungseinrichtung 9 in einem gesonderten Gehäuseteil 13 und dessen Anbringung am zylindrischen Gehäuse 1,1',1" entlang der vorgesehenen Verbindungsebene 14 möglich, die Zerkleinerungseinrichtung vom Gehäuse wieder zu entfernen und durch ein ebenfalls an der Verbindungsebene 14 zu befestigendes gesondertes zylindrisches Mantelteil 15 des Gehäuses zu ersetzen, wie dies in Fig. 5 veranschaulicht ist. Der Häcksler arbeitet dann wieder normal, d.h. ohne eine Einrichtung zur Körnerzerkleinerung. Ein wahlweiser Austausch der Gehäuseteile 15 und 13 macht es möglich, einen üblichen Feldhäcksler, wie er z.B. für Grassilage Anwendung findet, auch zum Ernten von Silomais einzusetzen und umgekehrt.

Die vorstehend zu Fig. 4 und 5 beschriebene Ausbildung ist selbstverständlich in entsprechender Weise auch für die Ausführungsformen nach Fig. 6 und 7 anwendbar.

Der Gegenstand der Erfindung ist nicht auf die in der Zeichnung dargestellten und zuvor beschriebenen Ausführungsbeispiele beschränkt, vielmehr sind im Rahmen der Patentansprüche auch noch andere Ausführungsformen denkbar und möglich. So kann die erfindungsgemäß vorgesehene Körner-Zerkleinerungseinrichtung sowohl bei Scheibenradhäckslern wie auch bei Trommelhäckslern Anwendung finden, wobei die Ausbildung des als Werkzeug vorgesehenen Messerrades oder der

0160953

Messertrommel in weiten Bereichen variieren kann. Auch kann die Zerkleinerungseinrichtung - axial gesehen - in einem anderen Quadranten ausgebildet sein; entscheidend ist allein, daß sie sich im Bereich zwischen der axialen Zuführöffnung und dem tangentialen Austrittsstutzen für das Gut befindet.

-.-.-.-.-.-.-.-.-.-.-.-.-.-.-.-.-

VB/St

Patentansprüche:

1.      Häcksler, insbesondere zum Ernten von Silomais, mit einem in einem zylindrischen, eine Rückhaltewand bildenden Gehäuse umlaufenden, mit Wurfschaufeln versehenen Messerrad oder einer Messertrommel und mit einer - gegebenenfalls wahlweise zuschaltbaren - Einrichtung zur Körnerzerkleinerung, dadurch gekennzeichnet, daß die Zerkleinerungseinrichtung von zumindest einer bereichsweise vorgesehenen Umfangserweiterung (9;9';9") des zylindrischen Gehäuses (1) gebildet ist, in der der aus dem Umfangsbereich des als Werkzeug vorgesehenen Messerrades (3) bzw. der Messertrommel etwa tangential abgeschleuderte Gutstrom (10) eine seinen etwa radialen Wiedereintritt in den Umfangsbereich des Werkzeugs bewirkende Umlenkung erfährt.

2.      Häcksler nach Anspruch 1, bei dem - gesehen in axialer Richtung - die axiale Zuführöffnung für das zu häckselnde Gut im I. und/oder II. Quadranten und die Austrittsöffnung für den tangentialen Auswurf des gehäckselten Guts im IV. Quadranten vorgesehen sind, dadurch gekennzeichnet, daß die Umfangserweiterung(en) (9;9';9") im III. Quadranten ausgebildet ist.

3.      Häcksler nach Anspruch 1 oder 2, dadurch gekennzeichnet, daß zwei Umfangserweiterungen (9';9") derart hintereinander gesetzt angeordnet sind, daß das aus der ersten Erweiterung (9') wieder in den Umfangsbereich des Werkzeugs (3)

- 10 -

0160953

gelangte Gut unmittelbar in die zweite Erweiterung (9")
geschleudert wird.

4.      Häcksler nach einem oder mehreren der Ansprüche 1 bis 3,
dadurch gekennzeichnet, daß die Umfangserweiterung(en)
(9;9';9") in einem Gehäuseteil (13) gebildet ist (sind), das
entlang einer am zylindrischen Gehäuse (1) vorgesehenen
Verbindungsebene (14) anbringbar ist, gegebenenfalls im wahlweisen Austausch mit einem zylindrischen Mantelteil (15)
des Gehäuses.

Fig. 1

Fig. 2

Fig. 3

0160953

*Fig. 4*

*Fig. 5*

*Fig. 6*

*Fig. 7*